# EUROPÄISCHE PATENTSCHRIFT

(11) **EP 2 989 053 B1**
(45) Veröffentlichungstag und Bekanntmachung des Hinweises auf die Patenterteilung: **19.07.2017**
(21) Anmeldenummer: 14707384.5
(22) Anmeldetag: 28.02.2014
(51) Int. Cl.: C01B 33/107

(54) **VERFAHREN ZUR HERSTELLUNG VON HEXACHLORDISILAN DURCH SPALTUNG VON HÖHEREN POLYCHLORSILANEN WIE OCTACHLORTRISILAN**
PROCESS FOR THE PREPARATION OF HEXACHLORODISILANE BY CLEAVAGE OF HIGHER POLYCHLOROSILANES SUCH AS OCTACHLOROTRISILANE
PROCÉDÉ DE PRODUCTION D'HEXACHLORODISILANE PAR DISSOCIATION DE POLYCHLOROSILANES DE POIDS MOLÉCULAIRE ASSEZ ÉLEVÉ COMME DES OCTACHLOROTRISILANES

(30) Priorität: 24.04.2013 DE 102013207441
(43) Veröffentlichungstag der Anmeldung: 02.03.2016
(73) Patentinhaber: Evonik Degussa GmbH, 45128 Essen (DE)
(72) Erfinder: LANG, Jürgen Erwin, 76229 Karlsruhe (DE); RAULEDER, Hartwig, 79618 Rheinfelden (DE); MÜH, Ekkehard, 79618 Rheinfelden (DE)
(86) Internationale Anmeldenummer: PCT/EP2014/053916
(87) Internationale Veröffentlichungsnummer: WO 2014/173566

(56) Entgegenhaltungen:
- EP-A1- 2 151 416
- DE-A1-102007 007 874
- DE-A1-102009 056 438
- DE-A1-102011 078 942
- Nova-Kem: "Building on Success from Our Production of Ultra-High Purity Hexachlorodisilane (HCDS)", ALD Conference Flyer - June 2012 - Nova-Kem, LLC., 1. Juni 2012 (2012-06-01), XP055108421, Gefunden im Internet: URL:http://www.google.nl/url?sa=t&rct=j&q= &esrc=s&source=web&cd=2&ved=0CDEQFjAB&url= http%3A%2F%2Fwww.nova-kem.com%2F_literatur e_136024%2FALD_Conferance_Flyer_-_June_201 2&ei=DMonU63QK8ySswbK4IHoDQ&usg=AFQjCNE8MG 7GpWUn8wjljWTZ8hluPB11Yg&sig2=02tIg4sHqghA jhgDVhYlTQ&bvm=bv.62922401,d.Yms&cad=rja [gefunden am 2014-03-18]

## Beschreibung

Die Erfindung betrifft ein Verfahren zur Umsetzung von Polychlorsilanen zu Hexachlordisilan, indem mindestens ein trimeres Polychlorsilan oder ein trimeres Polychlorsilan in einer Mischung mit höhermolekularen Polychlorsilanen einer Gasentladung ausgesetzt wird und Hexachlordisilan gebildet und isoliert wird.

Die WO 2008/098640 offenbart ein Verfahren zur Herstellung höherer Silane aus Siliciumtetrachlorid und wasserstoffenthaltenden Silanen, wie Trichlorsilan in einen Plasmareaktor. Bei diesem Prozess wird Hexachlordisilan in hoher Ausbeute erhalten, doch als Nebenprodukt wird auch Octachlortrisilan (OCTS, Si₃Cl₈) erhalten, das bislang aufwendig zu entsorgen ist.

Die DE 3126240 A1 offenbart eine Hochtemperaturzersetzung von Polychlorsilanen deren Molekulargewicht höher ist als das des Hexachlordisilans unter Intergasatmosphäre im Vakuum bei Temperaturen von 500 bis 1450° zur Abscheidung von Silicium.

Die WO 20002012122 offenbart die Abscheidung von Hexachlordisilan aus Abgasen der Herstellung von polykristallinem Silicium.

Problematisch bei einer thermischen Herstellung von Hexachlordisilan sind die ebenfalls gebildeten höheren Polychlorsilane, wie Si₄Cl₁₀ oder höher molekulare Polychlorsilane, da sie einen aufwendig zu entsorgenden Abfallstrom darstellen. Vor allem teiloxidierte und/oder teilhydrolysierte Derivate, wie Hexachlordisiloxan, sind brennbar und schlagempfindlich sowie explosiv. Ihre Bildung und Handhabung erhöht somit deutlich die Kosten für eine Sicherung der Anlagen und damit die Betriebskosten.

US2002/0187096 betrifft die Bildung von Silizium aus Trichlorsilan in Gegenwart von Wasserstoff, unter Bildung von Tetrachlorsilan und einem Disilan, das bei hohen Temperaturen zwischen 600 und 1200 °C zu Monosilan zersetzt wird.

Von Bedeutung sind verschiedene Polysilanverbindungsklassen, die homologe Reihe der SiₙClₙ₊₂, welche Ketten bildet sowie die Polysilane, die Ringe oder Polymere bilden mit SiₙCl₂ₙ als auch die Siliciumchloride mit geringerem Chlorgehalt wie SiCl₁,₅.

Die Patentanmeldung DE 102009056438 A1 offenbart ein Verfahren zur Herstellung von Hexachlordisilan, indem chloriertes Polysilan SiClₓ (x = 0,2 ... 0,8) mit Chlorgas oxidativ gespalten wird.

DE 102007007874 A1 sieht ein Verfahren zur Herstellung von dimeren und/oder trimeren Siliciumverbindungen, insbesondere von Siliciumhalogenverbindungen vor, das auch zur Herstellung von entsprechenden Germaniumverbindungen geeignet ist. Dazu werden Verbindungen Siₙ₊₂R₁R₂...R₈ (n = 0 oder 1) bzw. Verbindungen Geₙ₊₂R₁R₂...R₈ (n = 0 oder 1) einem nichtthermischen Plasma ausgesetzt.

Nova-Kem preist in einem Conference Flyer aus dem Jahre 2012 ein Verfahren zur Herstellung großer Mengen hochreinen Hexachlordisilans an (http://www.nova-kem.com/announcements/ald-2012-bald-2012-atom-layer-deposition).

In der europäischen Patentanmeldung EP 2151416 A1 wird die Verwendung von Chlorwasserstoff zur Zersetzung von Si₂Cl₆ bei hohen Temperaturen offenbart, wobei Trichlorsilan gewonnen wird.

In der Patentanmeldung DE 102011078942 A1 wird ein Verfahren zur Herstellung von Hexachlordisilan oder Ge₂Cl₆ vorgeschlagen, indem in einem Gas, das SiCl₄ oder GeCl₄ enthält, ein nichtthermisches Plasma mittels einer Wechselspannung der Frequenz f erzeugt und in das Plasma ein elektromagnetischer Impuls eingekoppelt wird. Es wird eine flüssige Phase erhalten, aus der reines Hexachlordisilan oder Ge₂Cl₆ gewonnen wird.

All diesen Verfahren gemeinsam ist, dass sie entweder keine großtechnische Methode zur Darstellung Hexachlordisilan sind, weil es sich um aufgefangene Nebenprodukte der Silizium Abscheidung handelt, um nicht isolierbare Zwischenstufen oder um stark mit Kohlenstoff oder Metallen, wie Titanchlorid, Aluminiumchlorid verunreinigte Chlorsilane.

Aufgabe der vorliegenden Erfindung war es, ein wirtschaftliches Verfahren zur Spaltung von Polychlorsilanen zu entwickeln, das es ermöglicht, ohne Katalysator eine Spaltung bei vergleichsweise niedrigen Temperaturen, vorzugsweise bei im Wesentlichen nicht thermischen Bedingungen zu ermöglichen, und zugleich vorzugsweise hochreines Hexachlordisilan bereitstellt. Das so hergestellte Hexachlordisilan soll insbesondere bezüglich der Verunreinigungen mit Bor, Phosphor, Kohlenstoff, und/oder Fremdmetallen höchstrein sein. Erwünscht ist ein Hexachlordisilan mit einem Gesamtgehalt der genannten Verunreinigungen von kleiner gleich 100 Gew.-ppm, vorzugsweise kleiner gleich 75 Gew.-ppm.

Gelöst wird die Aufgabe durch das erfindungsgemäße Verfahren, das erfindungsgemäß hergestellte Hexachlordisilan als auch durch die erfindungsgemäße Verwendung entsprechend den Merkmalen der Patentansprüche 1, 14 und 15.

Überraschend wurde gefunden, dass sich Octachlortrisilan (OCTS) unter den Bedingungen einer Gasentladung, insbesondere im nichtthermischen Plasma in Gegenwart von HCl selektiv zu Hexachlordisilan (HCDS) und Trichlorsilan spalten lässt. Idealisiert kann die Umsetzung anhand folgender Gleichung dargestellt werden:

Si₃Cl₈ + HCl → Si₂Cl₆ + HSiCl₃

Die Umsetzungsprodukte der Gasentladung werden kondensiert, und Hexachlordisilan (HCDS) kann nach Destillation höchstrein gewonnen werden.

Gegenstand der Erfindung ist somit ein Verfahren zur Umsetzung von Polychlorsilanen, insbesondere von Polychlorsilanen mit einem Gehalt an Octachlortrisilan, zu Hexachlordisilan, wobei das Hexachlordisilan vorzugsweise mit einem Gehalt von mindestens 99,9 Gew.-% erhalten werden kann, besonders bevorzugt nach einer destillativen Aufarbeitung der erhaltenen Umsetzungs- oder Spaltprodukte. Das Polychlorsilan weist vorzugsweise einen Kohlenstoffgehalt von weniger als 10 ppm auf, vorzugsweise einen Kohlenstoffgehalt unter der Nachweisgrenze der für den Nachweis von Kohlenstoff üblicherweise eingesetzten ICP-MS, ICP-OES, oder 29Si NMR Spektroskopie. Das Polychlorsilan weist einen nachfolgend genannten Gehalt an Verunreinigungen, insbesondere ausgewählt aus Bor, Phosphor und Fremdmetallen von unter 100 Gew.-ppm auf.

Gegenstand der Erfindung ist ein Verfahren zur Umsetzung von Polychlorsilan zu Hexachlordisilan, sowie ein Hexachlordisilan erhältlich nach diesem Verfahren, indem mindestens ein trimeres Polychlorsilan, insbesondere ein gasförmiges trimeres Polychlorsilan, oder ein trimeres Polychlorsilan in einer Mischung mit höhermolekularen Polychlorsilanen, insbesondere gasförmig, einem nichtthermischen anisothermen Plasma, das eine Elektronentemperatur Tₑ ≥ 10⁴ K und eine Gastemperatur T_{G} ≤ 10³ K aufweist, und der Arbeitsdruck, bei dem die Umsetzung durchgeführt wird, zwischen 1 bis 1000 mbar_{abs} liegt, ausgesetzt wird und Hexachlordisilan erhalten wird.

Vorzugsweise erfolgt die Umsetzung in Gegenwart von Chlorwasserstoff, besonders bevorzugt bei mit einem Überschuss an trimerem Polychlorsilan in Bezug auf den Chlorwasserstoff, beispielsweise mit einem Verhältnis von circa 2 : 1 bis annähernd einem äquimolaren Verhältnis von trimerem Polysilan und Chlorwasserstoff. Weiter ist es bevorzugt, wenn das Polysilan zur Umsetzung im nichtthermischen Plasma in Gegenwart von Chlorwasserstoff zuvor in die Gasphase überführt wurde.

Als ein Polychlorsilan gilt
a) ein trimeres Polychlorsilan oder synonym Chlortrisilan, insbesondere ein reines Chlortrisilan mit weniger als 100 Gew.-ppm an Verunreinigungen bis zur Nachweisgrenze oder bis 0,001 Gew.-ppt, und/oder vorzugsweise ein Polychlorsilan mit einem Gehalt an Chlortrisilan von 10 bis zu 100 Gew.-%, wie zwischen 10 bis 99,999999%, insbesondere von 20 bis 100 Gew.-%, besonders bevorzugt von 25 bis 100 Gew.-%, weiter bevorzugt von 25 bis 99,9 Gew.-%; wobei das Polychlorsilan vorzugsweise reines Octachlortrisilan mit einem Gehalt an Octachlortrisilan von größer 91 Gew-% bis zu 100 Gew.-% ist, vorzugsweise mit 95 bis 99,999999 Gew.-%;
   und/oder
b) eine Mischung umfassend ein trimeres Polychlorsilan und eine Mischung höhermolekulare Polychlorsilane, wie Chlorsilane ausgewählt aus Chlordisilanen, Chlortrisilanen, insbesondere Octachlortrisilan, Chlortetrasilanen, Chlorpentasilanen, Chlorhexasilanen sowie höhermolekularen Chlorsilanen mit mehr als sieben Siliziumatomen, wobei die Chlorsilane linear, verzweigt oder auch cyclisch aufgebaut sein können. Bevorzugt sind Perchlorsilane, wobei der Gehalt an Hexachlordisilan in der Mischung höhermolekularer Polychlorsilane vorzugsweise unter 10 Gew.-% bis 0,000001 Gew.-% beträgt.

Die vorgenannten Chlorsilane umfassen in der Regel neben Chlor-Substituenten auch Wasserstoff, wie beispielsweise H_{m*}Si_{n*}Cl_{(2n*+2)-m*} und/oder H_{m*}Si_{n*}Cl(_{2n*})_{-m*}, mit jeweils unabhängig n* größer gleich 2, insbesondere n* größer gleich 2 bis 20, und/oder jeweils unabhängig mit m* größer gleich 1, insbesondere mit m* größer gleich 1 bis 10.

Besonders bevorzugt gelten als Polychlorsilane Verbindungen der allgemeinen Formel I

I SiₙCl₂ₙ₊₂,

mit n größer gleich 2, insbesondere mit n größer gleich 2 bis 100, vorzugsweise mit n größer gleich 2 bis 50, besonders vorzugsweise mit n größer gleich 2 bis 10, wobei sie lineare als auch verzweigte Ketten bilden können, und Verbindungen der allgemeinen Formel II, die Ringe oder Polymere bilden:

II SiₙCl₂ₙ,

mit n größer gleich 3, insbesondere mit n größer gleich 4 bis 100, insbesondere mit n größer gleich 4 bis 50, besonders bevorzugt mit n größer gleich 4 bis 10, als auch Polychlorsilane mit geringerem Chlorgehalt gemäß der allgemeinen Formel III,

III SᵢₙCl_{1,5n},

mit n größer gleich 4 oder 5, insbesondere mit n größer gleich 6 bis 200, vorzugsweise mit n größer gleich 8 bis 100.

Es ist ein großer Vorteil des erfindungsgemäßen Verfahrens, dass diese Gemische, ohne vorherige Aufreinigung durch destillative Abtrennung der Einzelverbindungen, dem Plasma zugeführt werden können.

Als höhermolekulare Polychlorsilane gelten besonders bevorzugt alle Polychlorsilane mit mehr als drei Siliziumatomen, wie mit n größer gleich 4, insbesondere mit n größer gleich 4 bis 200 entsprechend den Formeln I, II und/oder III. Ebenfalls bevorzugte höhermolekulare Polychlorsilane umfassen Polychlorsilane mit mehr als drei Siliziumatomen und weisen einen Gehalt an Hexachlordisilan von unter 10 Gew.-% bis 0,000001 Gew.-% auf.

Als trimeres Polychlorsilan gilt ein Polychlorsilan mit drei jeweils unmittelbar über eine Einfachbindung kovalent aneinander gebundenen Siliziumatomen, wie ein Chlortrisilan, d. h. gemäß den Formeln I oder II mit n gleich 3, wie Cl₃Si-SiCl₂-SiCl₃, und mindestens einem Chlorsubstituenten, wobei die verbleibenden freien Valenzen mit Wasserstoff oder Brom, vorzugsweise mit Wasserstoff abgesättigt sind. Besonders bevorzugt ist ein trimeres Polychlorsilan, wie ein Chlortrisilan, erfindungsgemäß ein Octachlortrisilan (OCTS).

Besonders bevorzugt wird in dem erfindungsgemäßen Verfahren als Polychlorsilan ein hochreines Polychlorsilan eingesetzt mit weniger als 100 Gew.-ppm an Verunreinigungen im Polychlorsilan und vorzugsweise mit einem Gehalt an Polychlorsilan von mindestens 99,99 Gew.-%, wobei die Verunreinigungen in Summe weniger als 100 Gew.-ppm eines, mehrerer oder aller Elemente ausgewählt aus Bor, Phosphor, Kohlenstoff und Fremdmetallen betragen, insbesondere Bor, Phosphor, Kohlenstoff, Aluminium, Calcium, Eisen, Nickel, Titan und Zink vorliegen. Weiter bevorzugt wird im erfindungsgemäßen Verfahren als Polychlorsilan ein Polyperchlosilan eingesetzt, vorzugsweise ein hochreines Polyperchlorsilan mit weniger als 100 Gew.-ppm bis zur Nachweisgrenze oder bis 0,001 Gew.-ppt an Verunreinigungen, gemäß nachstehender Definition.

Oben genannte Verunreinigungen misst der Fachmann mittels ICP-MS, ICP-OES, oder 29Si NMR Spektroskopie. Doch da die Nachweisgrenzen solcher Verfahren bisweilen nicht ausreichen, wird auch eine alternative Methode angewandt, die in DE 10 2010 002 342 A1 beschrieben ist. Auf den Offenbarungsgehalt dieser Patentanmeldung wird ausdrücklich hingewiesen.

Bei der Methode werden Verunreinigungen durch Fremdatome nicht direkt bestimmt, sondern indirekt durch Messen einer physikalischen Eigenschaft einer Siliciumschicht, die aus den betreffenden Silanen hergestellt wird, nämlich der in der Fachwelt wohldefinierte *spezifische Widerstand.*

Wird aus den erfindungsgemäß als Prekursor oder Gemisch an Prekursoren eingesetztem Silan oder Silanen in einem Abscheideprozeß eine Siliciumschicht gebildet, finden sich die Verunreinigungen in der Siliciumschicht als Fremdatome wieder. Diese setzen Ladungsträger frei bzw. lösen diese aus dem Silicium-Wirtsgitter der Siliciumschicht aus und beeinflussen somit den *spezifischen Widerstand.* Die Dichte der Ladungsträger hängt aber in weiten Bereichen eineindeutig von der Konzentration der Fremdatome ab. Der Messwert des spezifischen Widerstandes in der Siliciumschicht erlaubt deshalb den Rückschluss auf den Gehalt an Verunreinigungen in dem Silan oder den Silanen.

Die Messung des Widerstandes und der Schichtdicke erfolgt über die so genannte SRP Methode (spreading resistance probe). Bei dieser Vorgehensweise wird die besagte Siliciumschicht auf einem Substrat, zum Beispiel einem kommerziell erhältlichen, auf definierte Weise präparierten Si-Wafer erzeugt und ein Stück des beschichteten Substrates unter einem definierten Winkel bis auf das Substrat zu einem Profil angeschliffen.

Die Widerstandsmessung erfolgt an diesem Profil als Funktion der Schichtdicke mittels zweier Probenspitzen, die das gesamte Profil in bestimmten Abständen abtasten und jeweils einen Widerstandswert bei ergeben. Über den Anschliffwinkel und die Weglänge lässt sich auch die Schichtdicke berechnen. Diese Messmethode ist in mehreren Normen detailliert beschrieben und legt die zuvor beschriebene Vorgehensweise fest. Bei den Messmethoden folgt der Fachmann beispielsweise den SEMI-Normen MF672 und MF674, oder der ASTM F 672-80.

In dem erfindungsgemäßen Verfahren wird besonders bevorzugt ein Polychlorsilan, abgekürzt PCS, eingesetzt, insbesondere Octachlortrisilan oder ein Octachlortrisilan in einer Mischung mit höhermolekularen Polychlorsilanen, vorzugsweise Polyperchlorsilanen, wobei das Polychlorsilan einen Gehalt an Octachlortrisilan zwischen 20 bis 99,9999 Gew.-% aufweist, bevorzugt mit einem Gehalt an Octachlortrisilan von 91 bis 99,9999999 Gew.-%, welches das folgende Verunreinigungsprofil eines, mehrerer oder aller folgenden Elemente aufweist. Liegt dieses Verunreinigungsprofil vor, wird das Polychlorsilan im Rahmen der Erfindung *"hochreines Polychlorsilan"* genannt:
a. Aluminium kleiner 5 Gew.-ppm oder
   von 5 Gew.-ppm bis 0,0001 Gew.-ppt,
   bevorzugt von 3 Gew.-ppm bis 0,0001 Gew.-ppt, und/oder
b. Bor kleiner 10 Gew.-ppm oder
   von 10 Gew.-ppm bis 0,0001 Gew.-ppt,
   bevorzugt von 5 bis 0,0001 Gew.-ppt,
   besonders bevorzugt von 3 Gew.-ppm bis 0,0001 Gew.-ppt, und/oder
c. Calcium kleiner 2 Gew.-ppm,
   bevorzugt von 2 Gew.-ppm bis 0,0001 Gew.-ppt, und/oder
d. Eisen kleiner gleich 20 Gew.-ppm,
   bevorzugt von 10 Gew.-ppm bis 0,0001 Gew.-ppt,
   besonders bevorzugt von 0,6 Gew.-ppm bis 0,0001 Gew.-ppt, und/oder
e. Nickel kleiner gleich 10 Gew.-ppm,
   bevorzugt von 5 Gew.-ppm bis 0,0001 Gew.-ppt,
   besonders bevorzugt von 0,5 Gew.-ppm bis 0,0001 Gew.-ppt, und/oder
f. Phosphor kleiner 10 Gew.-ppm,
   bevorzugt von 10 Gew.-ppm bis 0,0001 Gew.-ppt,
   besonders bevorzugt von 5 Gew.-ppm bis 0,0001 Gew.-ppt,
   ganz besonders bevorzugt von 3 Gew.-ppm bis 0,0001 Gew.-ppt, und/oder
g. Titan kleiner gleich 2 Gew.-ppm,
   bevorzugt von 1 Gew.-ppm bis 0,0001 Gew.-ppt,
   besonders bevorzugt von 0,6 Gew.-ppm bis 0,0001 Gew.-ppt,
   ganz besonders bevorzugt von 0,1 Gew.-ppm bis 0,0001 Gew.-ppt, und/oder
h. Zink kleiner gleich 3 Gew.-ppm,
   bevorzugt von 1 Gew.-ppm bis 0,0001 Gew.-ppt,
   besonders bevorzugt von 0,3 Gew.-ppm bis 0,0001 Gew.-ppt, und
   i Kohlenstoff, wobei Kohlenstoff in einer Konzentration enthalten ist, die zu der Summe der Verunreinigungen a. bis h. addiert wird. Der so erhaltene Wert ist kleiner als 100 Gew.-ppm. Vorzugsweise ist dieser Wert von 100 Gew.-ppm bis 0,001 Gew.-ppt, weiterhin bevorzugt kleiner als 50 Gew.-ppm, besonders bevorzugt von 50 Gew.-ppm bis 0,001 Gew.-ppt, weiterhin besonders bevorzugt von 10 Gew.-ppm bis 0,001 Gew.-ppt, weiterhin besonders bevorzugt kleiner als 5 Gew.-ppm, ganz besonders bevorzugt von 5 Gew.-ppm bis 0,001 Gew.-ppt.
Zur Durchführung des Verfahrens ist es zusätzlich zu den vorgenannten Merkmalen weiter bevorzugt, dass die Gasentladung in einem Ozonisator erfolgt. Die Gasentladung in dem Plasma kann ohne oder mit zumindest einem Inertgas oder Trägergas durchgeführt werden.
Es kann weiterhin vorteilhaft sein, zur Unterstützung der Verdampfung des Polychlorsilan ein Inertgas, wie Argon oder ein anderes übliches Inertgas, einzusetzen.
Ebenfalls ist es bevorzugt, wenn in dem erfindungsgemäßen Verfahren mindestens ein trimeres Polychlorsilan, vorzugsweise Octachlortrisilan, oder das trimere Polychlorsilan, insbesondere Octachlortrisilan, in einer Mischung mit höhermolekularen Polychlorsilanen, insbesondere Perchlorsilane und/oder Wasserstoff- und Chlor-substituierte Polychlorsilane, in Gegenwart von Chlorwasserstoff einer Gasentladung ausgesetzt wird. Dabei ist es besonders bevorzugt, wenn die Umsetzung mit einem hochreinem Chlorwasserstoffgas erfolgt, das vorzugsweise Verunreinigungen mit Fremdelementen oder Fremdmolekülen kleiner 100 Gew.-ppm bis 1 Gew.-ppb, insbesondere kleiner 100 Gew.-ppb bis 1 Gew.-ppb aufweist.
Als Fremdelemente bzw. Fremdmoleküle gelten alle chemischen Elemente, Salze und Moleküle, die nicht Chlorwasserstoff entsprechen. Die Umsetzeung im Verfahren wird bei einem Druck zwischen 1 bis 1000 mbar_{abs.}, weiter bevorzugt zwischen 1 bis 500 mbar_{abs}, vorzugsweise zwischen 10 bis 200 mbar_{abs}., besonders vorzugsweise zwischen 10 bis 100 mbar_{abs}, besser um 50 mbar_{abs} plus/minus 10 mbar_{abs}. durchgeführt. Gemäß dem Verfahren der Erfindung ist es weiter besonders bevorzugt, wenn als Polychlorsilan ein hochreines Polychlorsilan eingesetzt wird, vorzugsweise mit einem Gehalt an Polychlorsilan von 98 bis 99,9999 Gew.-%, und insbesondere einem Gehalt an Verunreinigungen von weniger als 2 Gew.-%, vorzugsweise von weniger als 100 Gew.-ppm. Dabei ist es weiter bevorzugt, wenn als hochreines Polychlorsilan ein Octachlortrisilan mit einem Gehalt an Octachlortrisilan von 80 bis 99,9999 Gew.-% eingesetzt wird, insbesondere ein hochreines Octachlortrisilan, vorzugsweise mit weniger als 100 Gew.-ppm an Verunreinigungen eingesetzt wird. Als Verunreinigungen gelten alle chemischen Elemente, Moleküle oder Ionen, die nicht einem Polychlorsilan entsprechen.
Das im Verfahren eingesetzte Polychlorsilan kann aus einer Umsetzung von Tetrachlorsilan mit Wasserstoff in einem nichtthermischen Plasma oder von Tetrachlorsilan mit Methyltrichlorsilan stammen und destillativ von Disilan und Monosilan-Verbindungen abgetrennt worden sein. Vorzugsweise ist das Polychlorsilan ein Sumpfprodukt der Destillation der Umsetzungsprodukte aus der Umsetzung von Tetrachlorsilan mit Wasserstoff oder der Umsetzung von Tetrachlorsilan mit Methyltrichlorsilan in einem nichtthermischen Plasma, insbesondere nach der destillativen Abtrennung von Disilan- und Monosilan-Verbindungen. Bevorzugt wird das nach der Offenbarung der WO 2008/098640 anfallende Nebenprodukt OCTS in einem ersten Reinigungsschritt nach dem dort offenbarten Verfahren satzweise mittels einer Vakuumdestillation abgetrennt, nachfolgend wird das erhaltene Polychlorsilan umfassend Octachlortrisilan und/oder höhermolekulare Polychlorsilane im Vakuum in die Gasphase überführt und mit einem Chlorwasserstoffstrom vermischt, der erhaltene Gesamtgasstrom umfassend Polychlorsilan (PCS) und Chlorwasserstoffgas wird der Gasentladung ausgesetzt, insbesondere dem nichtthermischen Plasma.

Das erfindungsgemäße Verfahren umfasst Schritt 1) und kann auch vorzugsweise die Schritte 2)-4) umfassen:
1) Umsetzung von Tetrachlorsilan mit Wasserstoff in einem nichtthermischen Plasma, welches anisotherm ist und eine Elektronentemperatur Tₑ ≥ 10⁴ K und eine Gastemperatur T_{G} ≤ 10³ K aufweist, und der Arbeitsdruck, bei dem die Umsetzung durchgeführt wird, zwischen 1 bis 1000 mbar_{abs} liegt,
2) destillative Abtrennung von Disilan- und Monosilanverbindungen und Erhalt von Polychlorsilanen als Sumpfprodukt,
3) Umsetzung der Polysilane in Gegenwart von Chlorwasserstoff im nichtthermischen Plasma und Erhalt von Hexachlordisilan, insbesondere Isolierung von Hexachlordisilan, und ggf.
4) destillative Abtrennung von leichtflüchtigen Verbindungen, wie Trichlorsilan oder generell von Monosilanverbindungen, destillative Abtrennung des Hexachlordisilans, und ggf. Erhalt höhersiedender Polychlorsilane im Sumpfprodukt, die vorzugsweise der Umsetzung bzw. Spaltung in Gegenwart von Chlorwasserstoff erneut zugeführt werden.
Nicht umgesetzte Polychlorsilane, insbesondere der allgemeinen Formel I, II und/oder III, können nach Bedarf der Gasentladung, vorzugsweise dem nichtthermischen Plasma erneut zugeführt werden. Zur vollständigen Umsetzung des Polychlorsilans, insbesondere des Octachlortrisilans, in Hexachlordisilan kann ein Kreisprozeß mit 1 bis ∞, vorzugsweise mit 1 bis 100 Zyklen genutzt werden, bevorzugt ist eine geringe Anzahl von 1 bis 5 Zyklen, vorzugsweise wird nur ein Zyklus durchlaufen. Alternativ kann auch das im Verfahren nicht umgesetzte Polychlorsilan zurückgeführt werden und mit neu zugeführtem Polychlorsilan der Umsetzung im nichtthermischen Plasma zugeführt werden.
Das mittels Umsetzung im nichtthermischen Plasma erhaltene Hexachlordisilan liegt neben Trichlorsilan rein in der resultierenden Phase vor, aus der es hochrein gewonnen werden kann, insbesondere mittels destillativer Aufarbeitung. Auf diese Weise kann beispielsweise Hexachlordisilan in höchster Reinheit von den übrigen Reaktionsprodukten und ggf. Polychlorsilan-Edukten isoliert werden, siehe Figur 3. Im ²⁹Si-NMR-Spektrum sind neben dem Signal des Hexachlordisilans (δ = 7,4 ± 0,1 ppm, DMSO) keine weiteren Verbindungen nachweisbar. Die Verunreinigung des Hexachlordisilans mit anderen Metallen und/oder Metallverbindungen liegt wenigstens für das jeweilige Metall oder die Metallverbindung im Bereich Gew.-ppm bis in den Bereich Gew.-ppt, vorzugsweise jeweils im Gew.-ppb-Bereich, wie nachfolgend angegeben, besonders bevorzugt ist eine maximale Verunreinigung mit anderen Metallen und/oder Metallverbindungen von jeweils 100 Gew.-ppb bis 1 Gew.-ppt, vorzugsweise von jeweils 50 Gew.-ppb bis 100 Gew.-ppt. Dies wird ferner erreicht, indem die enthaltenen Fremdmetallverunreinigungen überraschenderweise zu höheren Polychlorsilanen komplexiert werden.

Das nichtthermische Plasma wird in einem Plasmareaktor erzeugt und bewirkt eine Stoffumwandlung, die im Rahmen der Erfindung *"plasmaelektrisch"* genannt wird. Erfindungsgemäß eingesetzte Plasmen sind anisotherm. Für diese Plasmen ist eine hohe Elektronentemperatur Tₑ ≥ 10⁴ K und relativ niedrige Gastemperatur T_{G} ≤ 10³ K charakteristisch. Die für die chemischen Prozesse notwendige Aktivierungsenergie erfolgt überwiegend über Elektronenstöße. Typische nichtthermische Plasmen können beispielsweise durch Glimmentladung, HF-Entladung, Hohlkathodenentladung oder Koronarentladung erzeugt werden. Der Arbeitsdruck, bei dem die erfindungsgemäße Plasmabehandlung durchgeführt wird, liegt zwischen 1 bis 1000 mbar_{abs.}, bevorzugt bei 1 bis 800 mbar_{abs.}, besonders bevorzugt bei 100 bis 500 mbar_{abs.}, insbesondere bei 20 bis 100 mbar_{abs.}, besonders bevorzugt um 50 mbar_{abs.}, wobei die zu behandelnde Phase, insbesondere gasförmige Phase, umfassend Polychlorsilan und Chlorwasserstoff vorzugsweise auf eine Temperatur von -40 °C bis 400 °C eingestellt ist.

Für die Definition des nichtthermischen Plasmas und der homogenen Plasmakatalyse wird auf die einschlägige Fachliteratur verwiesen, wie beispielsweise auf "Plasmatechnik: Grundlagen und Anwendungen - Eine Einführung"; Autorenkollektiv, Carl Hanser Verlag, München/Wien; 1984, ISBN 3-446-13627-4.

Besonders bevorzugt beträgt der spezifische Energieeintrag zwischen 0,1 und 10 Ws/cm². Dabei ist es weiter bevorzugt, wenn der spezifische Energieeintrag mittels phasengenauer Momentanleistungsmessung mit einer Bandbreite von mindestens 250 kHz durchgeführt wird, wobei die Bestimmung der Momentanleistungsmessung in einem koaxialen Reaktor mit 50 cm² Entladungsfläche erfolgt. Ein koaxialer Reaktor ist vorzugsweise ein Rohrreaktor, insbesondere rotationssymmetrischer Rohrreaktor.

Der Energieeintrag zur Ausbildung des nichtthermischen Plasmas erfolgt vorzugsweise in der Art, dass sich in dem sich ausbildenden Plasma möglichst homogene Bedingungen für die Umsetzung des Polysilans mit dem Chlorwasserstoff ausbilden, dabei ist es besonders bevorzugt, wenn das nichtthermische Plasma bei einer Spannung betrieben wird, bei der die Entladung eine Glimmentladung ist und die gesamte Elektrodenfläche bedeckt.

Wie vorstehend ausgeführt, schließt sich an den Verfahrensschritt der Umsetzung im nichtthermischen Plasma ein Verfahrensschritt der Gewinnung des Hexachlordisilans an, vorzugsweise die Isolierung von reinem bis hochreinem Hexachlordisilan. Besonders bevorzugt erfolgt nach dem Verfahrensschritt der Umsetzung mittels Gasentladung, insbesondere der Umsetzung im nichtthermischen Plasma, eine Destillation des erhaltenen Umsetzungsproduktes enthaltend Hexachlordisilan. Die Destillation erfolgt vorzugsweise im Vakuum, besonders bevorzugt zwischen 10 und 100 mbar_{abs.} und einer Sumpftemperatur unter 100 °C, vorzugsweise um 80 °C. Mittels ²⁹Si-NMR Analytik wird ein hochreines Hexachlordisilan ohne einen Gehalt an Polychlorsilanen oder anderen Silanen erhalten, d. h. es kann ein hochreines Hexachlordisilan mit einem Gehalt von größer 99,999 Gew.-% erhalten werden. Der Gehalt an metallischen Verunreinigungen, die nicht Silizium entsprechen, liegt unterhalb der Nachweisgrenze vom IPC-MS. Das isolierte höchstreine Hexachlordisilan ist frei von Kohlenstoff, d.h. die Verunreinigung mit Kohlenstoff liegt im Hexachlordisilan unter 1 Gew.-ppb, und der Gehalt an Titan beträgt im höchstreinen Hexachlordisilan unter 10 Gew.-ppm, vorzugsweise unter 1 Gew.-ppm.

Das erfindungsgemäße Verfahren wird vorzugsweise derart durchgeführt, das Octachlortrisilan und Chlorwasserstoff im molaren Verhältnis von 10 : 1 bis 1 : 10 eingesetzt werden, insbesondere im Verhältnis von 5 : 1 bis 1: 5, vorzugsweise im molaren Verhältnis von 3 : 1 bis 1 : 2, besonders bevorzugt im molaren Verhältnis von um 2 : 1 mit jeweils plus/minus 0,5.

Gemäß einer Ausführungsvariante des erfindungsgemäßen Verfahrens wird das durch die Umsetzung erhaltene Hexachlordisilan an temperierten Oberflächen der Vorrichtung zur Umsetzung von Polychlorsilan abgeschieden, vorzugsweise weisen die Oberflächen eine Temperatur im Bereich von 0 bis 100 °C auf.

Gegenstand der Erfindung ist somit auch ein Verfahren, in dem ein Polychlorsilan, vorzugsweise ein hochreines Polychlorsilan, in der Gasphase einem nichtthermischen Plasma in Gegenwart von Chlorwasserstoff, vorzugsweise mit einem molaren Verhältnis von Polychlorsilan zu Chlorwasserstoff von 4 : 1 bis 1 : 1, insbesondere um 2 : 1, zu Hexachlordisilan und Trichlorsilan umgesetzt wird. Vorzugsweise wird als Umsetzungsprodukt ein Hexachlordisilan mit einem Gehalt an Trichlorsilan erhalten, vorzugsweise liegen Hexachlordisilan und Trichlorsilan im Umsetzungsprodukt etwa im Verhältnis von 1 : 1 vor.

Gegenstand der Erfindung ist auch ein Verfahren, in dem ein Polychlorsilan, vorzugsweise ein hochreines Polychlorsilan, in der Gasphase einem nichtthermischen Plasma in Gegenwart von Chlorwasserstoff, vorzugsweise mit einem molaren Verhältnis von Polychlorsilan zu Chlorwasserstoff von 4 : 1 bis 1 : 1, insbesondere um 2 : 1, zu Hexachlordisilan umgesetzt und nachfolgend destilliert wird, wobei ein hochreines Hexachlordisilan mit einem Gehalt an Hexachlordisilan von mindestens 99,999 Gew.-% erhalten wird, vorzugsweise liegt der Gehalt an Verunreinigungen im Hexachlordisilan bei
aa. Aluminium kleiner 5 Gew.-ppm, oder
   von 5 Gew.-ppm bis 0,0001 Gew.-ppt,
   bevorzugt von 3 Gew.-ppm bis 0,0001 Gew.-ppt,
   besonders bevorzugt von 0,8 Gew.-ppm bis 0,0001 Gew.-ppt,
   weiters besonders bevorzugt von 0,6 Gew.-ppm bis 0,0001 Gew.-ppt,
   weiterhin besonders bevorzugt von 0,1 Gew.-ppm bis 0,0001 Gew.-ppt,
   ganz besonders bevorzugt von 0,01 Gew.-ppm bis 0,0001 Gew.-ppt,
   wobei noch bevorzugter der Bereich von 1 Gew.-ppb bis 0,0001 Gew.-ppt ist,
bb. Bor von 5 bis 0,0001 Gew.-ppt,
   bevorzugt im Bereich von 3 Gew.-ppm bis 0,0001 Gew.-ppt,
   besonders bevorzugt im Bereich von 10 Gew.-ppb bis 0,0001 Gew.-ppt,
   noch bevorzugter im Bereich von 1 Gew.-ppb bis 0,0001 Gew.-ppt,
cc. Calcium kleiner 2 Gew.-ppm,
   bevorzugt von 2 Gew.-ppm bis 0,0001 Gew.-ppt,
   weiter bevorzugt von 0,3 Gew.-ppm bis 0,0001 Gew.-ppt,
   weiter bevorzugt von 0,01 Gew.-ppm bis 0,0001 Gew.-ppt,
   besonders bevorzugt von 1 Gew.-ppb bis 0,0001 Gew.-ppt,
dd. Eisen von 10 Gew.-ppm bis 0,0001 Gew.-ppt,
   vorzugsweise von 0,6 Gew.-ppm bis 0,0001 Gew.-ppt,
   weiterhin bevorzugt von 0,05 Gew.-ppm bis 0,0001 Gew.-ppt,
   besonders bevorzugt von 0,01 Gew.-ppm bis 0,0001 Gew.-ppt, und
   ganz besonders bevorzugt von 1 Gew.-ppb bis 0,0001 Gew.-ppt,
ee. Nickel von 5 Gew.-ppm bis 0,0001 Gew.-ppt,
   vorzugsweise von 0,5 Gew.-ppm bis 0,0001 Gew.-ppt,
   weiterhin bevorzugt von 0,1 Gew.-ppm bis 0,0001 Gew.-ppt,
   besonders bevorzugt von 0,01 Gew.-ppm bis 0,0001 Gew.-ppt, und
   ganz besonders bevorzugt von 1 Gew.-ppb bis 0,0001 Gew.-ppt,
ff. Phosphor von 5 Gew.-ppm bis 0,0001 Gew.-ppt,
   vorzugsweise von 3 Gew.-ppm bis 0,0001 Gew.-ppt,
   weiterhin bevorzugt von 10 Gew.-ppb bis 0,0001 Gew.-ppt, und
   ganz besonders bevorzugt von 1 Gew.-ppb bis 0,0001 Gew.-ppt,
gg. Titan von 1 Gew.-ppm bis 0,0001 Gew.-ppt,
   vorzugsweise von 0,6 Gew.-ppm bis 0,0001 Gew.-ppt,
   weiterhin bevorzugt von 0,1 Gew.-ppm bis 0,0001 Gew.-ppt,
   besonders bevorzugt von 0,01 Gew.-ppm bis 0,0001 Gew.-ppt, und
   ganz besonders bevorzugt von 1 Gew.-ppb bis 0,0001 Gew.-ppt,
hh. Zink von 1 Gew.-ppm bis 0,0001 Gew.-ppt,
   vorzugsweise von 0,3 Gew.-ppm bis 0,0001 Gew.-ppt,
   weiters bevorzugt von 0,1 Gew.-ppm bis 0,0001 Gew.-ppt,
   besonders bevorzugt von 0,01 Gew.-ppm bis 0,0001 Gew.-ppt, und
   ganz besonders bevorzugt von 1 Gew.-ppb bis 0,0001 Gew.-ppt, und
ii. Kohlenstoff, wobei
   Kohlenstoff in einer Konzentration enthalten ist, die zu der Summe der Verunreinigungen aa. bis hh. addiert wird. Der so erhaltene Wert ist kleiner als 100 Gew.-ppm, bevorzugt kleiner 10 Gew.-ppm, besonders bevorzugt kleiner 5 Gew.-ppm.

Die zur Durchführung des Verfahrens verwendete Vorrichtung umfasst einen Reaktor zur Erzeugung des nichtthermischen Plasmas, einen Auffangbehälter und ein Kolonnensystem zur destillativen Aufarbeitung, wobei das Kolonnensystem für die kontinuierliche Verfahrensführung mindestens zwei Kolonnen, insbesondere mindestens 3 Kolonnen umfasst. Die Kolonnen können zur Aufarbeitung am Kolonnenkopf und/oder am Kolonnensumpf der ersten Kolonne vorgesehen sein. In einer zweckmäßigen Variante kann das Kolonnensystem vier Kolonnen umfassen. Bei der diskontinuierlichen Verfahrensführung ist eine Kolonne ausreichend. Die Kolonnen sind beispielsweise Rektifikationskolonnen. Die Umsetzung der Polychlorsilane erfolgt im Reaktor, wobei die Umsetzungsprodukte je nach Siedepunkt in einem, dem Reaktor zugeordneten, Auffangbehälter angereichert werden können oder direkt über ein, der Vorrichtung zugeordnetes, Kolonnensystem im aus der Vorrichtung entfernt werden.

Ferner können in der Vorrichtung neben dem Reaktor auch ein oder mehrere weitere Reaktoren zum Einsatz kommen, die in Reihe oder parallel geschaltet werden. Erfindungsgemäß ist mindestens ein Reaktor der Vorrichtung ein Ozonisator. Ein großer Vorteil besteht in der alternativ möglichen Verwendung von handelsüblichen Ozonisatoren, so dass die Investitionskosten für das erfindungsgemäße Verfahren sehr gering sind. Die Reaktoren der Erfindung sind zweckmäßig mit Glasrohren, insbesondere mit Quarzglasrohren ausgestattet, wobei die Rohre bevorzugt parallel bzw. koaxial angeordnet und mittels Spacern aus inertem Material beabstandet sind. Als inertes Material eignet sich insbesondere Teflon oder Glas. Es ist bekannt, dass die eingekoppelte Elektronenenergie für die Plasmaentladung "E" abhängig vom Produkt p·d aus Druck p und Elektrodenabstand d ist. Für das erfindungsgemäße Verfahren liegt das Produkt aus Elektrodenabstand und Druck in der Regel im Bereich von 0,001 bis 300 mm x bar, vorzugsweise von 0,05 bis 100 mm x bar, besonders bevorzugt bei 0,08 bis 0,3 mm x bar, insbesondere bei 0,1 bis 0,2 mm x bar. Die Entladung kann mittels verschiedenartiger Wechselspannungen oder gepulster Spannungen von 1 bis 10⁶ V angeregt werden. Gleichfalls kann der Kurvenverlauf der Spannung u. a. rechteckig, trapezförmig, gepulst oder stückweise aus einzelnen zeitlichen Verläufen zusammengesetzt sein. Besonders geeignet sind pulsförmige Anregungsspannungen, sie ermöglichen eine gleichzeitige Ausbildung der Entladung im gesamten Entladungsraum des Reaktors. Die Impulsdauer beim Pulsbetrieb richtet sich nach dem Gassystem, sie liegt bevorzugt zwischen 10 ns und 1 ms. Bevorzugte Spannungsamplituden liegen bei 10 Vp bis 100 kVp, bevorzugt 100 Vp bis 10 Vp, insbesondere bei 50 bis 5 Vp, in einem Mikrosystem. Die Frequenz der Wechselspannung kann zwischen 10 MHz und 10 ns-Impulsen (Tastverhältnis 10:1) bis zu niedrigen Frequenzen im Bereich von 10 bis 0,01 Hz eingestellt werden. Beispielsweise kann am Reaktor eine Wechselspannung mit einer Frequenz von 1,9 kHz und einer Amplitude von 35 kV "Peak to Peak" angelegt werden. Der spezifische Energieeintrag liegt zwischen 0,1 bis 10 Ws/cm².

Gegenstand der Erfindung ist demnach ebenfalls ein hochreines Hexachlordisilan, erhalten nach dem erfindungsgemäßen Verfahren mit einem Gehalt an Hexachlordisilan von mindestens 99,999 Gew.-%, und weniger als 100 Gew.-ppm an Verunreinigungen ausgewählt aus Bor, Phosphor, Kohlenstoff und Fremdmetallen, wie Eisen, Nickel, Calcium, Aluminium, Titan, Zink.

Ebenfalls Gegenstand der Erfindung ist ein hochreines Hexachlordisilan mit einem Gehalt an Hexachlordisilan von mindestens 99,999 Gew.-% und einem Gehalt an Verunreinigungen, insbesondere ausgewählt aus Bor, Phosphor und Fremdmetallen, vorzugsweise mit
aaa. Aluminium kleiner 5 Gew.-ppm, oder
   von 5 Gew.-ppm bis 0,0001 Gew.-ppt,
   bevorzugt von 3 Gew.-ppm bis 0,0001 Gew.-ppt,
   besonders bevorzugt von 0,8 Gew.-ppm bis 0,0001 Gew.-ppt,
   weiters besonders bevorzugt von 0,6 Gew.-ppm bis 0,0001 Gew.-ppt,
   weiterhin besonders bevorzugt von 0,1 Gew.-ppm bis 0,0001 Gew.-ppt,
   ganz besonders bevorzugt von 0,01 Gew.-ppm bis 0,0001 Gew.-ppt,
   wobei noch bevorzugter der Bereich von 1 Gew.-ppb bis 0,0001 Gew.-ppt ist,
bbb. Bor von 5 bis 0,0001 Gew.-ppt,
   bevorzugt im Bereich von 3 Gew.-ppm bis 0,0001 Gew.-ppt,
   besonders bevorzugt im Bereich von 10 Gew.-ppb bis 0,0001 Gew.-ppt,
   noch bevorzugter im Bereich von 1 Gew.-ppb bis 0,0001 Gew.-ppt,
ccc. Calcium kleiner 2 Gew.-ppm,
   bevorzugt von 2 Gew.-ppm bis 0,0001 Gew.-ppt,
   weiter bevorzugt von 0,3 Gew.-ppm bis 0,0001 Gew.-ppt,
   weiter bevorzugt von 0,01 Gew.-ppm bis 0,0001 Gew.-ppt,
   besonders bevorzugt von 1 Gew.-ppb bis 0,0001 Gew.-ppt,
ddd. Eisen von 10 Gew.-ppm bis 0,0001 Gew.-ppt,
   vorzugsweise von 0,6 Gew.-ppm bis 0,0001 Gew.-ppt,
   weiterhin bevorzugt von 0,05 Gew.-ppm bis 0,0001 Gew.-ppt,
   besonders bevorzugt von 0,01 Gew.-ppm bis 0,0001 Gew.-ppt, und
   ganz besonders bevorzugt von 1 Gew.-ppb bis 0,0001 Gew.-ppt,
eee. Nickel von 5 Gew.-ppm bis 0,0001 Gew.-ppt,
   vorzugsweise von 0,5 Gew.-ppm bis 0,0001 Gew.-ppt,
   weiterhin bevorzugt von 0,1 Gew.-ppm bis 0,0001 Gew.-ppt,
   besonders bevorzugt von 0,01 Gew.-ppm bis 0,0001 Gew.-ppt, und
   ganz besonders bevorzugt von 1 Gew.-ppb bis 0,0001 Gew.-ppt,
fff. Phosphor von 5 Gew.-ppm bis 0,0001 Gew.-ppt,
   vorzugsweise von 3 Gew.-ppm bis 0,0001 Gew.-ppt,
   weiterhin bevorzugt von 10 Gew.-ppb bis 0,0001 Gew.-ppt, und
   ganz besonders bevorzugt von 1 Gew.-ppb bis 0,0001 Gew.-ppt,
ggg. Titan von 1 Gew.-ppm bis 0,0001 Gew.-ppt,
   vorzugsweise von 0,6 Gew.-ppm bis 0,0001 Gew.-ppt,
   weiterhin bevorzugt von 0,1 Gew.-ppm bis 0,0001 Gew.-ppt,
   besonders bevorzugt von 0,01 Gew.-ppm bis 0,0001 Gew.-ppt, und
   ganz besonders bevorzugt von 1 Gew.-ppb bis 0,0001 Gew.-ppt,
hhh. Zink von 1 Gew.-ppm bis 0,0001 Gew.-ppt,
   vorzugsweise von 0,3 Gew.-ppm bis 0,0001 Gew.-ppt,
   weiters bevorzugt von 0,1 Gew.-ppm bis 0,0001 Gew.-ppt,
   besonders bevorzugt von 0,01 Gew.-ppm bis 0,0001 Gew.-ppt, und
   ganz besonders bevorzugt von 1 Gew.-ppb bis 0,0001 Gew.-ppt, und
iii. Kohlenstoff, wobei
   Kohlenstoff in einer Konzentration enthalten ist, die zu der Summe aus den Verunreinigungen aaa. bis hhh. addiert wird. Der so erhaltene Wert ist kleiner als
   100 Gew.-ppm, bevorzugt kleiner als 10 Gew.-ppm, besonders bevorzugt kleiner 5 Gew.-ppm.

Als Fremdmetalle gelten alle Metalle mit Ausnahme von Silicium.

Das nach dem erfindungsgemäßen Verfahren hergestellte hochreine Hexachlordisilan eignet sich in hohem Maße zur Verwendung bei der Herstellung von Silizium, Siliciumnitrid, Siliciumoxynitrid, Siliciumcarbid, Siliciumoxycarbid oder Siliciumoxid, insbesondere zur Herstellung von Schichten dieser Materialien sowie zur Herstellung von epitaktischen Schichten, bevorzugt durch Niedrigtemperaturepitaxie. Hexachlordisilan eignet sich hervorragend zur Niedrigtemperaturabscheidung von Siliciumschichten. Diese Schichten lassen sich beispielsweise über Chemical Vapor Deposition (CVD) herstellen. Das nach dem erfindungsgemäßen Verfahren hergestellte, hochreine Hexachlordisilan eignet sich vorzugsweise auch als Ausgangssubstanz für die Herstellung von hochreinem Disilan (Si₂H₆) oder Trisilan (Si₃H₈).

Ebenfalls offenbart ist die Verwendung von Halogenwasserstoff, insbesondere von Chlorwasserstoff, unter den Bedingungen einer Gasentladung, vorzugsweise unter den Bedingungen im nichtthermischen Plasma, zur Spaltung von Polyhalogensilanen, insbesondere von Polychlorsilanen, vorzugsweise von Polyperchlorsilanen, besonders bevorzugt von Octachlorsilan.

Gemäß einer bevorzugten Alternative wird das erfindungsgemäße Verfahren durchgeführt, indem das bei der (i) Umsetzung im nichtthermischen aus den Polychlorsilanen gebildete Hexachlordisilan in einem Auffangbehälter der Vorrichtung zur Durchführung des Verfahrens angereichert wird, beispielsweise in einem Sumpf der Vorrichtung, der nachfolgend einer (ii) destillativen Aufarbeitung zugeführt wird. Die Verfahrensschritte (i) und/oder (ii) können diskontinuierlich oder kontinuierlich durchgeführt werden. Besonders wirtschaftlich ist eine Verfahrensführung, bei der die Verfahrensschritte (i) und (ii) kontinuierlich erfolgen, dabei werden die Polychlorsilane und Chlorwasserstoff dem Plasmareaktor zur Gasphasenbehandlung im nichtthermischen Plasma kontinuierlich zugeführt. Aus der sich bildenden Phase werden die höher siedenden Umsetzungsprodukte in einem Auffangbehälter abgeschieden, vorzugsweise bei ca. Raumtemperatur zwischen 25 und 18 °C. Es kann zweckmäßig sein, zu Beginn des Verfahrens das Hexachlordisilan im Auffangbehälter zunächst anzureichern, als auch nichtumgesetzte Polychlorsilane in den Reaktor zurückzuleiten. Überprüft werden kann dies, indem Proben entnommen und mittels FT-IR oder NMR-Spektroskopie analysiert werden. So kann man den Prozess auch kontinuierlich mittels sogenannter "online-Analytik" überwachen. Sobald Hexachlordisilan eine ausreichende Konzentration im Auffangbehälter, dem sogenannten "Sumpf" erreicht hat, kann die destillative Aufarbeitung, zur Abtrennung des Hexachlordisilans in kontinuierlicher oder diskontinuierlicher Betriebsweise erfolgen. Wie erläutert, ist bei diskontinuierlicher destillativer Aufarbeitung eine Kolonne ausreichend. Dazu wird Hexachlordisilan am Kopf einer Kolonne mit ausreichender Anzahl an Trennstufen in hoher oder höchster Reinheit entnommen. Die geforderte Reinheit kann mittels GC, IR, NMR, ICP-MS oder durch Widerstandsmessung bzw. GD-MS nach Abscheidung des Si überprüft werden.

Erfindungsgemäß erfolgt die kontinuierliche Aufarbeitung der Umsetzungsprodukte, wie Hexachlordisilan und Trichlorsilan in einem Kolonnensystem mit mindestens zwei Kolonnen, bevorzugt in einem System mit mindestens 3 Kolonnen. Auf diese Weise kann beispielsweise das bei der Reaktion nicht umgesetzte Chlorwasserstoffgas (HCl) über eine so genannte Leichtsiederkolonne über Kopf, der ersten Kolonne, abgetrennt und das aus dem Sumpf aufgefangene Gemisch in seine Bestandteile aufgetrennt werden, indem Trichlorsilan (HSiCl₃) am Kopf einer zweiten Kolonne und Hexachlordisilan (Si₂Cl₆) am Kopf einer dritten Kolonne destillativ abgetrennt werden gegebenenfalls kann zur Abtrennung des nicht umgesetzten Polychlorsilans, wie dem Octachlortrisilan, eine vierte Kolonne zugeschaltet werden. Auf diese Weise kann das aus dem Plasmareaktor erhaltene Gemisch an Umsetzungsprodukten durch Rektifikation getrennt und das Reaktionsprodukt Hexachlordisilan, als auch Trichlorsilan in der gewünschten Reinheit erhalten werden. Die destillative Aufarbeitung des Hexachlordisilans kann sowohl unter Normaldruck als auch unter Unterdruck oder Überdruck erfolgen, insbesondere bei einem Druck zwischen 1 bis 1500 mbar_{abs.}. Bevorzugte Drücke liegen zwischen 40 bis 250 mbar_{abs.}, insbesondere zwischen 40 bis 150 mbar_{abs.}, vorzugsweise zwischen 40 bis 100 mbar_{abs.}. Die Kopftemperatur der Kolonne zur destillativen Aufarbeitung des Hexachlordisilans unter Vakuum weist dabei eine Kopftemperatur zwischen 50 und 250 °C auf, insbesondere ist das Vakuum so eingestellt, dass die Temperatur zwischen 50 und 150 °C, besonders bevorzugt zwischen 50 und 110 °C liegt. Die ohnehin nicht stark verunreinigten Verfahrensprodukte lassen sich durch die destillative Aufarbeitung mit sehr hohem Gehalt und in sehr hoher bis höchster Reinheit isolieren.

Das folgende Beispiel erläutert das erfindungsgemäße Verfahren näher.

### Beispiel 1:

Octachlortrisilan wurde kontinuierlich in die Gasphase überführt, mit Chlorwasserstoffgas im molaren Verhältnis von 2 : 1 gemischt, und bei einem Druck von 50 mbar_{abs.} durch einen Quarzglasreaktor mit Gasentladungsstrecke geführt. Die Gasentladung wurde mit näherungsweise sinusförmigem Spannungsverlauf betrieben und wies im Mittel einen spezifischen Energieeintrag etwa 3 Ws/cm² auf. Dabei erfolgte die Leistungsmessung nach der dem Fachmann bekannten Methode der multiplikativen, phasengenauen Verknüpfung von Momentanstrom I (x=t₀) mit Momentanspannung U(x=t₀) zum Momentanleistungswert im beispielhaften koaxialen Reaktor mit 50 cm² Entladungsfläche.

Die so erhaltenen Werte unterliegen beispielsweise bei transienten Entladungen erheblichen Schwankungen. In derartigen Fällen liegt die stochastische Abweichung des Energieeintrags in Ws/cm² bei 1 Sigma von 1 mWs/cm² bis 10 Ws/cm².

Die 3 dB-Grenzfrequenz der eingesetzten Messapparatur betrug etwa 250 kHz. Bei Geräten mit höherer Grenzfrequenz können sich andere stochastische Abweichungen als die oben angegebenen ergeben.

Die nach Durchlaufen der Gasentladungsstrecke erhaltenen gasförmigen Umsetzungsprodukte wurden bei 20 °C kondensiert und einer Feindestillation unterworfen. Die Destillation erfolgte diskontinuierlich in einer Destillationsapparatur mit einer 50 cm Kolonne mit Sulzer-Metallpackung.

Zunächst wurde Trichlorsilan abdestilliert. Anschließend wurde der Druck auf etwa 650 mbar_{abs.} abgesenkt und bei einer Sumpftemperatur von circa 80 °C reines Hexachlordisilan bei einer Kopftemperatur um 70 °C abdestilliert.

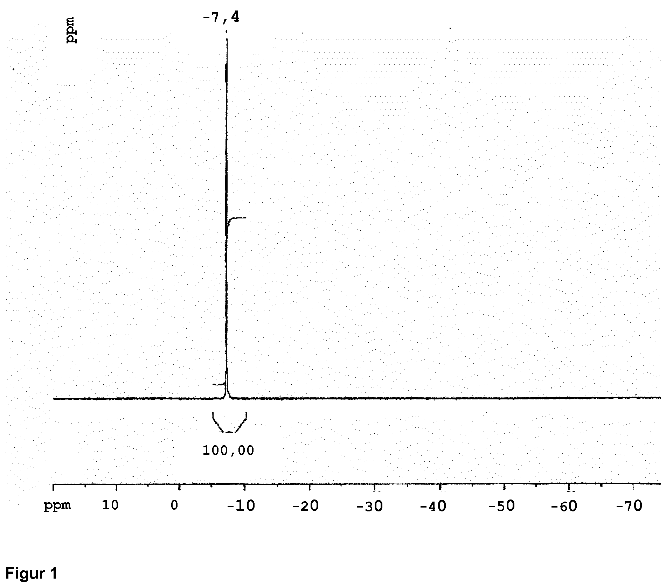

Das in **Figur 1** dargestellte ²⁹Si-NMR zeigte nur ein Signal bei δ = -7,4 ppm (in DMSO, 99,34 MHz-29Si-NMR Spektrum von Hexachlordisilan, hergestellt nach dem erfindungsgemäßen Verfahren.

## Patentansprüche

1. Verfahren zur Umsetzung von Polychlorsilanen zu Hexachlordisilan,
indem mindestens ein trimeres Polychlorsilan oder ein trimeres Polychlorsilan in einer Mischung mit höhermolekularen Polychlorsilanen einem nichtthermischen Plasma ausgesetzt wird und Hexachlordisilan erhalten wird, wobei
das nichtthermische Plasma anisotherm ist und
eine Elektronentemperatur Tₑ ≥ 10⁴ K und eine Gastemperatur T_{G} ≤ 10³ K aufweist, und der Arbeitsdruck, bei dem die Umsetzung durchgeführt wird, zwischen 1 bis 1000 mbar_{abs} liegt.

2. Verfahren nach Anspruch 1,
**dadurch gekennzeichnet,**
**dass** mindestens ein trimeres Polychlorsilan oder ein trimeres Polychlorsilan in einer Mischung mit höhermolekularen Polychlorsilanen in Gegenwart von Chlorwasserstoff einem nichtthermischen Plasma ausgesetzt wird.

3. Verfahren nach einem der Ansprüche 1 oder 2,
**dadurch gekennzeichnet,**
**dass** die Umsetzung im Vakuum stattfindet, zwischen 1 bis 1000 mbar_{abs.}.

4. Verfahren nach einem der Ansprüche 1 oder 3,
**dadurch gekennzeichnet,**
**dass** als Polychlorsilan Octachlortrisilan eingesetzt wird, insbesondere ein hochreines Octachlortrisilan, vorzugsweise mit weniger als 100 Gew.-ppm an Verunreinigungen eingesetzt wird.

5. Verfahren nach einem der Ansprüche 1 oder 4,
**dadurch gekennzeichnet,**
**dass** der spezifische Energieeintrag zwischen 0,1 und 10 Ws/cm² beträgt.

6. Verfahren nach einem der Ansprüche 1 oder 5,
**dadurch gekennzeichnet,**
**dass** der spezifische Energieeintrag mittels phasengenauer Momentanleistungsmessung mit einer Bandbreite von mindestens 250 kHz durchgeführt wird, wobei die Bestimmung der Momentanleistungsmessung in einem koaxialen Reaktor mit 50 cm² Entladungsfläche erfolgt.

7. Verfahren nach einem der Ansprüche 1 oder 6,
**dadurch gekennzeichnet,**
**dass** sich an den Schritt der Umsetzung mittels nichtthermischem Plasma eine Destillation des erhaltenen Hexachlordisilan enthaltenden Umsetzungsproduktes anschließt.

8. Verfahren nach Anspruch 7,
**dadurch gekennzeichnet,**
**dass** hochreines Hexachlordisilan mit einem Gehalt an Hexachlordisilan von mindestens 99,999 Gew.-% erhalten wird.

9. Verfahren nach Anspruch 1,
**dadurch gekennzeichnet,**
**dass** als Polychlorsilan ein hochreines Polychlorsilan mit weniger als 100 Gew.-ppm an Verunreinigungen eingesetzt wird.

10. Verfahren nach Anspruch 1,
**dadurch gekennzeichnet,**
**dass** als Polychlorsilan ein Polyperchlorsilan eingesetzt wird.
**dass** als Polychlorsilan ein hochreines Polyperchlorsilan mit weniger als 100 Gew.-ppm an Verunreinigungen eingesetzt wird.

11. Verfahren nach Anspruch 1,
**dadurch gekennzeichnet,**
**dass** Octachlortrisilan und Chlorwasserstoff in molaren Verhältnis von 10 : 1 bis 1 : 10 eingesetzt werden, insbesondere im Verhältnis von 2 : 1

12. Verfahren nach einem der Ansprüche 1 bis 11,
**dadurch gekennzeichnet,**
**dass** der Reaktor mit mindestens einem Glasrohr, insbesondere mit einem Quarzglasrohr ausgestattet ist.

## Claims

1. Process for converting polychlorosilanes into hexachlorodisilane,
by one or more trimeric polychlorosilanes or a trimeric polychlorosilane in a mixture with higher molecular weight polychlorosilanes being exposed to a nonthermal plasma and hexachlorodisilane being obtained, wherein
the nonthermal plasma is anisothermal and has an electron temperature Tₑ ≥ 10⁴ K and a gas temperature T_{G} ≤ 10³ K
and the working pressure at which the reaction is carried out is between 1 to 1000 mbar_{abs}.

2. Process according to Claim 1,
**characterized in that**
one or more trimeric polychlorosilanes or a trimeric polychlorosilane in a mixture with higher molecular weight polychlorosilanes are exposed to a nonthermal plasma in the presence of hydrogen chloride.

3. Process according to either of Claims 1 and 2, **characterized in that**
the conversion takes place in a vacuum between 1 to 1000 mbar_{abs.}.

4. Process according to either of Claims 1 and 3, **characterized in that**
octachlorotrisilane is used as polychlorosilane, in particular a high-purity octachlorotrisilane, preferably comprising less than 100 weight ppm of impurities.

5. Process according to either of Claims 1 and 4, **characterized in that**
the specific energy input is between 0.1 and 10 Ws/cm².

6. Process according to either of Claims 1 and 5, **characterized in that**
the specific energy input is effected using phase-accurate measurement of instantaneous power at a band width of at least 250 kHz, the measurement of instantaneous power being carried out in a coaxial reactor with 50 cm² discharge area.

7. Process according to either of Claims 1 and 6, **characterized in that**
the step of conversion via nonthermal plasma is followed by a distillation of the resultant hexachlorodisilane-containing conversion product.

8. Process according to Claim 7,
**characterized in that**
high-purity hexachlorodisilane having a hexachlorodisilane content of not less than 99.999 wt% is obtained.

9. Process according to Claim 1,
**characterized in that**
the polychlorosilane used is a high-purity polychlorosilane having less than 100 weight ppm of impurities.

10. Process according to Claim 1,
**characterized in that**
the polychlorosilane used is a polyperchlorosilane,
the polychlorosilane used is a high-purity polyperchlorosilane having less than 100 weight ppm of impurities.

11. Process according to Claim 1,
**characterized in that**
octachlorotrisilane and hydrogen chloride are used in a molar ratio in the range from 10:1 to 1:10, in particular in a ratio of 2:1.

12. Process according to any of Claims 1 to 11, **characterized in that**
the reactor is equipped with one or more than one glass tube, in particular a quartz glass tube.

## Revendications

1. Procédé pour la transformation de polychlorosilanes en hexachlorodisilane, en ce qu'au moins un polychlorosilane trimère ou un polychlorosilane trimère en mélange avec des polychlorosilanes de poids moléculaire supérieur est soumis à un plasma non thermique et de l'hexachlorodisilane est obtenu, le plasma non thermique étant anisotherme et présentant une température électronique Tₑ ≥ 10⁴ K et une température gazeuse T_{G} ≤ 10³ K et la pression de travail, à laquelle la transformation est réalisée, se situant entre 1 à 1000 mbar_{abs}.

2. Procédé selon la revendication 1, **caractérisé en ce qu'**au moins un polychlorosilane trimère ou un polychlorosilane trimère en mélange avec des polychlorosilanes de poids moléculaire supérieur est soumis à un plasma non thermique en présence d'acide chlorhydrique.

3. Procédé selon l'une quelconque des revendications 1 ou 2, **caractérisé en ce que** la transformation a lieu sous vide, entre 1 et 1000 mbar_{abs}.

4. Procédé selon l'une quelconque des revendications 1 ou 3, **caractérisé en ce qu'**on utilise, comme polychlorosilane, de l'octachlorotrisilane, en particulier un octachlorotrisilane de haute pureté, présentant de préférence moins de 100 ppm en poids d'impuretés.

5. Procédé selon l'une quelconque des revendications 1 ou 4, **caractérisé en ce que** l'apport énergétique spécifique est situé entre 0,1 et 10 Ws/cm².

6. Procédé selon l'une quelconque des revendications 1 ou 5, **caractérisé en ce que** l'apport énergétique spécifique est réalisé au moyen d'une mesure de la puissance instantanée compensée en phases à une largeur de plage d'au moins 250 kHz, la détermination de la mesure de la puissance instantanée ayant lieu dans un réacteur coaxial présentant une surface de décharge de 50 cm2 .

7. Procédé selon l'une quelconque des revendications 1 ou 6, **caractérisé en ce qu'**une distillation du produit de transformation obtenu, contenant de l'hexachlorodisilane, suit l'étape de transformation au moyen d'un plasma non thermique.

8. Procédé selon la revendication 7, **caractérisé en ce qu'**on obtient de l'hexachlorodisilane de haute pureté présentant une teneur en hexachlorodisilane d'au moins 99, 999% en poids.

9. Procédé selon la revendication 1, **caractérisé en ce qu'**on utilise, comme polychlorosilane, un polychlorosilane de haute pureté, présentant moins de 100 ppm en poids d'impuretés.

10. Procédé selon la revendication 1, **caractérisé en ce qu'**on utilise un polyperchlorosilane comme polychlorosilane, **en ce qu'**on utilise, comme polychlorosilane, un polyperchlorosilane de haute pureté, présentant moins de 100 ppm en poids d'impuretés.

11. Procédé selon la revendication 1, **caractérisé en ce qu'**on utilise l'octachlorotrisilane et l'acide chlorhydrique dans un rapport molaire de 10:1 à 1:10, en particulier dans un rapport de 2:1.

12. Procédé selon l'une quelconque des revendications 1 à 11, **caractérisé en ce que** le réacteur est équipé d'au moins un tube en verre, en particulier d'un tube en verre à quartz.
